# EUROPÄISCHE PATENTSCHRIFT

(11) **EP 1 892 173 B1**
(45) Veröffentlichungstag und Bekanntmachung des Hinweises auf die Patenterteilung: **16.12.2009**
(21) Anmeldenummer: 07015147.7
(22) Anmeldetag: 02.08.2007
(51) Int. Cl.: B62D 5/04, B62D 6/00, B62D 15/02

(54) **Flurförderzeug mit einer elektrischen Lenkeinrichtung sowie Verfahren zur Steuerung eines Flurförderzeugs mit einer elektrischen Lenkeinrichtung**
Industrial truck with an electrical steering device and method for steering an industrial truck with an electric steering device
Chariot de manutention doté d'un système de direction électrique et procédé destiné à la commande d'un chariot de manutention à l'aide d'un système de direction électrique

(30) Priorität: 23.08.2006 DE 102006039549
(43) Veröffentlichungstag der Anmeldung: 27.02.2008
(73) Patentinhaber: Jungheinrich Aktiengesellschaft, 22047 Hamburg (DE)
(72) Erfinder: Kramer, Dieter, Dipl.-Ing., 24558 Ulzburg (DE); Steiner, Michael, Dipl.-Ing., 22965 Todendorf (DE); Von Thienen, Nils, Dipl.-Ing., 22305 Hamburg (DE); Wiegandt, Jens, Dipl.-Ing., 01917 Kamenz (DE)
(74) Vertreter: Graalfs, Edo

(56) Entgegenhaltungen:
- EP-A- 1 270 496
- EP-A- 1 310 419
- EP-A- 1 533 211
- DE-A1- 19 625 350

## Beschreibung

Die vorliegende Erfindung betrifft ein Flurförderzeug mit einer elektrischen Lenkeinrichtung. Die elektrische Lenkeinrichtung stellt die Position eines gelenkten Rades über einen Lenkmotor ein. Zur Einstellung ist eine Lenksteuerung vorgesehen, die die Lenkeinrichtung bestimmter Betriebszustände des Flurförderzeugs und/oder der Lenkeinrichtung deaktiviert. Eine solche Deaktivierung dient dazu, eine unnötige Leistungsaufnahme durch den Lenkmotor zu vermeiden, wenn die Lenkeinrichtung nicht benötigt wird.

Aktiviert wird die Lenkeinrichtung wieder, wenn die Lenkung des gelenkten Rades sich um mehr als einen vorbestimmten Änderungswinkel aus einer Differenzlage ändert. In der Lenksteuerung, können auch weitere Kriterien für eine erneute Aktivierung der Lenkeinrichtung hinterlegt sein. Die Erfindung betrifft ebenfalls ein Verfahren zum Betreiben eines Flurförderzeugs mit einer elektrischen Lenkeinrichtung.

Bei bekannten elektrischen Lenkeinrichtungen kann die Situation auftreten, daß eine Deaktivierung der Lenkeinrichtung unterbleibt, obwohl Betriebszustände gegeben sind, die eine Deaktivierung der Lenkeinrichtung erlauben. Insbesondere bei elektrischen Lenkeinrichtungen, die einen Differenzwinkel zwischen einem von einem Lenkwinkelgeber vorgegebenen Soll-Wert und einem Ist-Wert des gelenkten Rades erfassen. Unterbleibt eine Deaktivierung der Lenkeinrichtung, so tritt durch die Halteströme eine thermische Belastung der Steuerung und des Motors auf, die es zu vermeiden gilt.

Aus EP 1 310 419 A2 ist ein Verfahren und eine Vorrichtung zur Ausrichtung eines Lenkwinkelgebers für eine elektrische Lenkung eines Flurförderzeugs bekannt. Hierbei wird zur Erleichterung der Ausrichtung zwischen Lenkwinkelgeber und gelenktem Rad in einer Ausrichtphase ein anderes Übersetzungsverhältnis gewählt als während der Betriebsphase, entsprechend dem Oberbegriff der Ansprüche 1 und 5.

Der Erfindung liegt die Aufgabe zugrunde, ein Flurförderzeug mit einer elektrischen Lenkeinrichtung sowie ein Verfahren zum Betreiben eines solchen Flurförderzeugs bereitzustellen, bei dem ein elektrischer Lenkmotor ohne Sicherheitsverlust abgeschaltet werden kann.

Erfindungsgemäß wird die Aufgabe durch ein Flurförderzeug mit den Merkmalen gemäß Anspruch 1 und ein Verfahren mit den Merkmalen gemäß Anspruch 5 gelöst. Vorteilhafte Ausgestaltung bilden die Gegenstände der Unteransprüche.

Das erfindungsgemäße Flurförderzeug ist mit einer elektrischen Lenkeinrichtung ausgestattet, die über einen Lenkmotor die Ausrichtung eines gelenkten Rades stellt. Je nach Ausbildung des Flurförderzeuges können auch mehr als ein Rad gelenkt werden. Für die elektrische Lenkeinrichtung ist eine Lenksteuerung vorgesehen, die in bestimmten Betriebszuständen des Flurförderzeugs und/oder der Lenkeinrichtung deaktiviert wird. Im folgenden bezeichnet die Deaktivierung der Lenkeinrichtung das Abschalten des Lenkmotors und die Aktivierung der Lenkeinrichtung das Einschalten des Lenkmotors. Die Lenksteuerung aktiviert die Lenkeinrichtung wieder, wenn die Stellung des gelenkten Rades sich um mehr als einen vorbestimmten Änderungswinkel aus einer Referenzlage verändert. Erfindungsgemäß setzt die Lenksteuerung den Wert für die Referenzlage bei einer Deaktivierung der Lenkeinrichtung derart fest, daß die Referenzlage der Ist-Stellung des Rades im Zeitpunkt der Deaktivierung zuzüglich eines Verstellwinkels entspricht, der sich nach einem Abschalten des Lenkmotors einstellt. Die erfindungsgemäße Lenksteuerung definiert für die deaktivierte Lenkeinrichtung eine geänderte Referenzlage. Die geänderte Referenzlage entspricht der Ist-Lage zu dem Zeitpunkt der Deaktivierung und einem Verstellwinkel, der eine selbständige Verstellung des gelenkten Rades nach Deaktivierung des Lenkmotors berücksichtigt. Der Erfindung liegt die Erkenntnis zugrunde, daß das oder die gelenkten Räder eines Flurförderzeugs nach einer Deaktivierung des Lenkmotors sich verstellen können, und somit die Position des nicht weiter über den Lenkmotor gestellten Rades verändern. Bei einer herkömmlichen Lenksteuerung könnte durch diese Verdrehung des gelenkten Rades nach Deaktivierung des Lenkmotors bereits wieder die Aktivierung der Lenksteuerung ausgelöst werden, so daß ein dauerhaftes Gegenhalten des Lenkmotors gegen die Bandagenspannung erfolgt. Auch könnte bei einer herkömmlichen Lenksteuerung ein Fehler ausgelöst werden, weil das Rad und/oder der Motor sich bewegt, ohne daß ein entsprechender Soll-Wert vorliegt. Bei der erfindungsgemäßen Lenkeinrichtung wird eine solche dauerhafte Belastung oder falsche Fehlererkennung vermieden.

In einer bevorzugten Weiterführung entspricht der Verstellwinkel für die Referenzlage bei deaktivierter Lenkeinrichtung dem Winkel um den sich das gelenkte Rad selbsttätig bei Abschalten des Lenkmotors dreht.

Bevorzugt ist die Lenkeinrichtung bei dem erfindungsgemäßen Flurförderzeug deaktivierbar, wenn kein Fahr-Soll-Wert vorliegt.

Auch ist zweckmäßigerweise vorgesehen, daß eine Deaktivierung der Lenkeinrichtung nur dann erfolgt, wenn eine Bremse des Flurförderzeugs aktiviert ist.

Ebenfalls hat es sich als vorteilhaft herausgestellt, eine Deaktivierung der Lenkeinrichtung nur in Betriebszuständen zuzulassen, in denen keine Hebeanforderung vorliegt.

Die erfindungsgemäße Aufgabe wird ebenfalls durch ein Verfahren zur Steuerung eines Flurförderzeugs gelöst, daß eine elektrische Lenkeinrichtung besitzt, die über einen Lenkmotor die Position eines gelenkten Rades einstellt, und eine Lenksteuerung aufweist, die die Lenkeinrichtung in bestimmten Betriebszuständen des Flurförderzeugs und/oder der Lenkeinrichtung deaktiviert und die Lenkeinrichtung aktiviert, wenn die Stellung des gelenkten Rades sich um mehr als ein vorbestimmten Änderungswinkel aus einer Referenzlage entfernt. Bei dem erfindungsgemäßen Verfahren wird der Wert für die Referenzlage festgesetzt, nachdem die Lenkeinrichtung deaktiviert wurde, indem ausgehend von der Ist-Stellung des Rades ein Verstellwinkel hinzugezählt wird. Bevorzugt entspricht der Verstellwinkel dem Winkel, um den sich das gelenkte Rad selbsttätig bei Abschalten des Lenkmotors dreht, beispielsweise weil eine Bandagenentspannung für das gelenkte Rad erfolgt.

Eine vorteilhafte Ausgestaltung des erfindungsgemäßen Verfahrens wird anhand der Figuren näher erläutert. Es zeigt:
- Fig. 1: eine elektrische Lenkeinrichtung für ein Flurförderzeug mit einem Differenzwinkelsensor in einer schematischen Darstellung und
- Fig. 2: den Verlauf des Referenzwinkels über der Zeit.

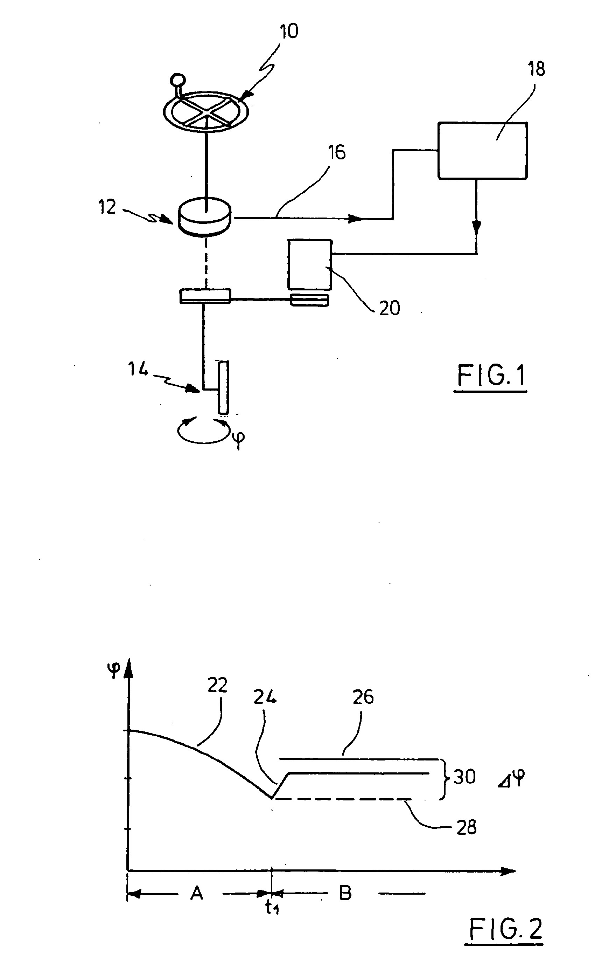

Fig. 1 zeigt den schematischen Aufbau einer elektrischen Lenkung für ein Flurförderzeug mit einem Differenzwinkelsensor.

Ein Lenkrad 10 dient als Lenkwinkelgeber, mit dem der Fahrer den gewünschten Lenkwinkel vorgibt. Der Differenzwinkelsensor 12 mißt die Winkeldifferenz zwischen den am Lenkwinkelgeber 10 vorgegebenen Lenkwinkel und den sich am gelenkten Rad 14 einstellenden Ist-Wert. Eine mechanische Kraftübertragung zwischen Lenkwinkelgeber 10 und gelenktem Rad 14 erfolgt bei dem dargestellten Aufbau der Lenkeinrichtung nicht. Grundsätzlich kann die Erfindung auch bei anderen elektrischen Lenkeinrichtungen eingesetzt werden.

Das Signal 16 des Differenzwinkelsensors liegt an der Lenksteuerung 18 an. Über die Steuerung 18 wird ein Lenkmotor 20 angesteuert, der dann den Lenkwinkel φ stellt.

Fig. 2 zeigt den zeitlichen Verlauf der Stellung des gelenkten Rades 14 über der Zeit. Der Lenkwinkel ist als durchgehende Kurve 22 dargestellt. Während des ersten Zeitabschnitts A, wird der Lenkwinkel kontinuierlich verringert. Zum Zeitpunkt T₁ wird der Lenkmotor abgeschaltet. Dies führt bedingt durch die Spannung der Bandage zu einem Ansteigen 24 des Lenkwinkels. Die Bandagenspannung ergibt sich aus der Haftreibung des Reifens bzw. der Bandage gegenüber dem Untergrund. Die Referenzlage für die nachfolgende Deaktivierungsphase B wird auf den Wert 26 gesetzt. Der Wert 26 entspricht dem Ist-Wert 28 des Lenkwinkels zum Zeitpunkt der Deaktivierung plus einem Verstellwinkel Δφ 30 der ungefähr der auftretenden Verstellung des gelenkten Rades entspricht.

Für einen in der Deaktivierungsphase B vorgegebenen Differenzwinkel wird verglichen, ob die Stellung des gelenkten Rades von der Referenzlage 26 um mehr als einen vorbestimmten Winkelwert abweicht. In diesem Fall wird dann eine erneute Aktivierung der Lenkeinrichtung ausgelöst.

## Patentansprüche

1. Flurförderzeug mit einer elektrischen Lenkeinrichtung, die über einen Lenkmotor (20) die Position eines gelenkten Rades (14) stellt, und einer Lenksteuerung (18), die den Lenkmotor in bestimmten Betriebszuständen des Flurförderzeugs und/oder der Lenkeinrichtung abschaltet und den Lenkmotor aktiviert, wenn die Stellung des gelenkten Rades sich um mehr als ein vorbestimmten Änderungswinkel aus einer Referenzlage ändert,
**dadurch gekennzeichnet, daß** die Lenksteuerung (18) den Wert für die Referenzlage (26) bei Abschaltung des Lenkmotors derart setzt, daß die Referenzlage (26) der Ist-Stellung (28) des Rades im Zeitpunkt der Abschaltung zuzüglich einem Verstellwinkel Δ φ (30) entspricht, der dem Winkel entspricht, um den sich das gelenkte Rad selbsttätig bei Abschalten des Lenkmotors (20) dreht.

2. Flurförderzeug nach Anspruch 1, **dadurch gekennzeichnet, daß** der Lenkmotor abschaltbar ist, wenn kein Fahr-Soll-Wert vorliegt.

3. Flurförderzeug nach Anspruch 1 oder 2, **dadurch gekennzeichnet, daß** der Lenkmotor abschaltbar ist, wenn eine Bremse für das Flurförderzeug aktiviert ist.

4. Flurförderzeug nach einem der Ansprüche 1 bis 3, **dadurch gekennzeichnet, daß** der Lenkmotor abschaltbar ist, wenn keine Hebeanforderung vorliegt.

5. Verfahren zur Steuerung eines Flurförderzeugs, das eine elektrische Lenkeinrichtung besitzt, die über einen Lenkmotor (20) die Position eines gelenkten Rades (14) stellt, und eine Lenksteuerung (18) aufweist, die den Lenkmotor in bestimmten Betriebszuständen des Flurförderzeugs und/oder der Lenkeinrichtung abschaltet und den Lenkmotor einschaltet, wenn die Stellung des gelenkten Rades (14) sich um mehr als einen vorbestimmten Änderungswinkel aus einer Referenzlage ändert,
**dadurch gekennzeichnet, daß** der Wert für die Referenzlage (26) festgesetzt wird, nachdem der Lenkmotor abgeschaltet wurde, indem ausgehend von der Ist-Stellung des Rades im Zeitpunkt der Abschaltung ein Verstellwinkel Δ φ (30) hinzugezählt wird, der dem Winkel entspricht, um den sich das gelenkte Rad selbsttätig bei Abschalten des Lenkmotors (20) dreht.

## Claims

1. Industrial truck with an electrical steering device, which sets the position of a steered wheel (14) via a steering motor (20), and a steering controller (18), which shuts down the steering motor in certain operating states of the industrial truck and/or steering device and activates the steering motor if the position of the steered wheel changes from the reference position by more than a predetermined change angle,
**characterized in that** the steering controller (18) sets the value for the reference position (26) during shutdown of the steering motor such that the reference position (26) matches the actual position (28) of the wheel at the point in time of the shutdown plus an adjustment angle Δϕ (30), which matches the angle, around which the steered wheel automatically turns when the steering motor (20) is shut down.

2. The industrial truck according to claim 1, **characterized in that** the steering motor can be shut down if there is no drive set point value.

3. The industrial truck according to claim 1 or 2, **characterized in that** the steering motor can be shut down if a brake for the industrial truck is activated.

4. The industrial truck according to one of claims 1 through 3, **characterized in that** the steering motor can be shut down if there is no need for lifting.

5. Method for steering an industrial truck with an electrical steering device, which sets the position of a steered wheel (14) via a steering motor (20), and has a steering controller (18), which shuts down the steering motor in certain operating states of the industrial truck and/or steering device and turns on the steering motor if the position of the steered wheel (14) changes from the reference position by more than a predetermined change angle,
**characterized in that** the value for the reference position (26) is determined after the steering motor has been shut down **in that** an adjustment angle Δϕ (30) is added to the actual position of the wheel at the point in time of the shutdown, which matches the angle around which the steered wheel automatically turns when the steering motor (20) is shut down.

## Revendications

1. Chariot de manutention doté d'un système de direction électrique qui règle par le biais d'un moteur de direction (20) la position d'une roue directrice (14), et d'une commande de direction (18) qui arrête le moteur de direction dans des modes de fonctionnement particuliers du chariot de manutention et/ou du système de direction et active le moteur de direction quand la position de la roue directrice se modifie de plus d'un angle de modification prédéterminé par rapport à une position de référence,
**caractérisé en ce que** la commande de direction (18) règle la valeur pour la position de référence (26) lors de l'arrêt du moteur de direction de telle sorte que la position de référence (26) correspond à la position réelle (28) de la roue au moment de l'arrêt, avec un angle de décalage Δϕ (30) en plus, qui correspond à l'angle selon lequel la roue directrice tourne automatiquement lors de l'arrêt du moteur de direction (20).

2. Chariot de manutention selon la revendication 1, **caractérisé en ce que** le moteur de direction peut être arrêté lorsqu'il n'y a pas de valeur de consigne de marche.

3. Chariot de manutention selon la revendication 1 ou 2, **caractérisé en ce que** le moteur de direction peut être arrêté lorsqu'un frein est activé pour le chariot de manutention.

4. Chariot de manutention selon l'une des revendications 1 à 3, **caractérisé en ce que** le moteur de direction peut être arrêté lorsqu'il n'y a pas de demande de levage.

5. Procédé destiné à la commande d'un chariot de manutention, qui possède un système de direction électrique qui règle par le biais d'un moteur de direction (20) la position d'une roue directrice (14) et présente une commande de direction (18) qui arrête le moteur de direction dans des modes de fonctionnement particuliers du chariot de manutention et/ou du système de direction et met en marche le moteur de direction lorsque la position de la roue directrice (14) se modifie de plus d'un angle de modification prédéterminé par rapport à une position de référence,
**caractérisé en ce que** la valeur pour la position de référence (26) est établie après que le moteur de direction a été arrêté **en ce que** partant de la position réelle de la roue au moment de l'arrêt un angle de décalage Δϕ (30) est ajouté, qui correspond à l'angle selon lequel la roue directrice tourne automatiquement lors de l'arrêt du moteur de direction (20).
